# EUROPEAN PATENT APPLICATION

(11) **EP 4 717 394 A2**
(43) Date of publication of application: **01.04.2026**
(21) Application number: 25205020.8
(22) Date of filing: 26.09.2025
(51) Int. Cl.: B23K 20/12

(54) **APPARATUS AND RELATED METHODS FOR FRICTION STIR ADDITIVE MANUFACTURING REPAIR OF MATERIALS**

(30) Priority: 26.09.2024 US 202418898289
(71) Applicant: RTX Corporation, Farmington, CT 06032 (US)
(72) Inventor: EL-WARDANY, Tahany, Vernon, 06066 (US); ASARE, Ted A., Glastonbury, 06033 (US); MASTRANGELO, Christopher Robert, Medford, 02155 (US)
(74) Representative: Dehns

(57) **Abstract**

A repair system for a part (1340) for a gas turbine engine includes a deposition system (1308) that implements a friction stir additive manufacturing (FSAM) process. An inspection system coupled to the repair system identifies a region of interest having damage on the part (1340). A process for deposition of metallic deposition material onto the region of interest performed using the deposition system (1308). A rod (1324) of the metallic deposition material is moved using pressure exerted within the deposition system (1308) into a deposition zone (1328) of the region of interest. The region of interest is pre-heated prior to the pressure being exerted. Frictional heat is generated when the rod (1324) contacts the deposition zone (1328). Parameters to control the components within the deposition system (1308) are determined using a function and a depth of the layers (1346) of the metallic deposition material determined for enabling the repair process.

## Description

### FIELD OF THE INVENTION

The subject matter disclosed herein relates to an apparatus and related methods to repair parts using friction stir additive manufacturing (FSAM) repair. In particular, the subject matter disclosed herein relates to repairing parts using identified parameters for the FSAM repair process.

### BACKGROUND OF THE INVENTION

Melting base processes have been used for repair of many materials, especially aerospace materials. Some nickel-base materials, however, may not easily be repaired due to their hot or cold cracking sensitivity. MAR-M-247 may be a good castability superalloy due to the addition of hafnium (Hf) that shows excellent creep and oxidation properties due to the high gamma prime (γ') volume fraction of > 60% and a high content of refractory elements. MAR-M-247, however, may be difficult to repair due to its sensitivity to hot cracking during welding due to its high Al and Ti content. The high gamma prime γ' may make it difficult to weld due to its high cracking susceptibility in the heat affected zone (HAZ) during welding.

To enhance the repairability of MAR-M-247, an electron beam melting (EBM) process may be used to build or repair MAR-M-247 high-gamma prime superalloys. The EBM process, however, is less sensitive to crack formation due to its high process temperatures and the high degree of flexibility in beam deflection and focusing.

It may be appreciated that a need exists for a repair process of part having MAR-M-247 that takes into account the sensitivity to hot cracking that does not involved high temperature processes.

### SUMMARY OF THE INVENTION

The present disclosure is directed, in a first aspect, to a method for repairing a part using a friction stir additive manufacturing (FSAM) process. The method includes identifying a region of interest of the part. The method also includes pre-heating the region of interest using a pre-heat system in conjunction with a deposition system. The method also includes positioning a rod of consumable metallic deposition material within a rotatable hollow shaft of the deposition system. The method also includes exerting pressure at an upper end of the rod to move the metallic deposition material into a deposition zone of the region of interest of the part. The method also includes rotating the rotatable hollow shaft so as to rotate the rod while the pressure is being exerted to generate frictional heat when the rod contacts a surface of the part in the region of interest. The method also includes depositing at least one layer of the metallic deposition material at a thickness using the deposition system. The deposition system rotates the rotatable shaft at a rotational speed and moves the part in a direction of a feed speed based on a function of the thickness of the at least one layer.

In additional examples, the method also includes laterally confining the metallic deposition material in the deposition zone on the region of interest of the part.

In additional examples, the method also includes heating the rod using a heating element positioned adjacent the deposition zone. The heating element is an induction coil, a laser, or an acetylene torch.

In additional examples, the method also includes scanning the part with a scanner of the inspection system. The method also includes determining the region of interest based on damage detected using a model of the scanned part.

In additional examples, the method also includes indicating the region of interest to be repaired to a repair system coupled to the deposition system.

In additional examples, the method also includes machining the deposited at least one layer of the metallic deposition material. The metallic deposition material includes an MAR-M-247 alloy material.

In additional examples, the method also includes defining a number of the at least one layer of the metallic deposition material.

In yet another aspect, the present disclosure is directed to a method for repairing a part having damage. The method includes scanning the part using a scanning process to generate a scanned model. The scanned model indicates the damage to the part. The method also includes comparing the scanned model to an original model of the part to indicate a region of interest on the part having the damage. The method also includes identifying the region of interest on the part. The method also includes placing the part in a deposition system having a spindle with a rotatable hollow shaft. The method also includes exerting a pressure on a rod of metallic deposition material within the rotatable hollow shaft. The method also includes determining at least one parameter for a friction stir additive manufacturing (FSAM) process using the deposition system. The at least one parameter includes a rotational speed of the rotatable hollow shaft and a speed in a feed direction for the deposition system. The method also includes determining a thickness of a layer of the metallic deposition material to be applied by the deposition system. The method also includes rotating the rotatable hollow shaft at the rotational speed. The method also includes moving the part having the region of interest in the feed direction at the speed. The method also includes applying at least one layer of the metallic deposition material at the determined thickness of the layer.

In additional examples, the method also includes pre-heating the region of interest on the part prior to applying the at least one layer of the metallic deposition material.

In additional examples, the method also includes heating a deposition zone of the at least one layer in the region of interest using a heating element.

In additional examples, the method also includes providing a feed mechanism attached to an upper end of the rotatable hollow shaft. The method also includes using the feed mechanism to exert the pressure to an end of the rod. The method also includes moving the metallic deposition material into a deposition zone in the region of interest.

In additional examples, the metallic deposition material is a nickel alloy. The nickel alloy may include a MAR-M-247 alloy.

In yet another aspect, the present disclosure is directed to a system to repair a part. The system includes an inspection system configured to identify a region of interest of the part having damage. The system also includes a repair system having a deposition system. The deposition system is configured to pre-heat the region of interest using a pre-heat system. The deposition system is further configured to position a rod of consumable metallic deposition material within a rotatable hollow shaft of the deposition system. The deposition system is further configured to exert pressure at an upper end of the rod to move the metallic deposition material into a deposition zone of the region of interest of the part. The deposition system is further configured rotate the rotatable hollow shaft so as to rotate the rod while the pressure is being exerted to generate frictional heat when the rod contacts a surface of the part in the region of interest. The deposition system is further configured to deposit at least one layer of the metallic deposition material at a thickness using the deposition system. The deposition system rotates the rotatable shaft at a rotational speed and moves the part in a direction of a feed speed based on a function of the thickness of the at least one layer.

In additional examples, the deposition system includes a heating element configured to heat the region of interest in the deposition zone.

In additional examples, the inspection system includes a scanner configured to scan the part.

In additional examples, the deposition system includes cam shaped followers including rollers having an outer diameter surface configured to contact the metallic deposition material in the deposition zone.

In additional examples, the metallic deposition material includes a MAR-M-247 alloy.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Figure 1 illustrates a block diagram of a system for repairing a part according to the disclosed embodiments.
Figure 2 illustrates a block diagram of a control system for an inspection system according to the disclosed embodiments.
Figure 3 illustrates a flowchart for inspecting a part that is performed by the control system of the inspection system according to the disclosed embodiments.
Figure 4 illustrates a flowchart for a feedback driven scan configured to be performed by the control system according to the disclosed embodiments.
Figure 5 illustrates a deposition system which includes a spindle according to the disclosed embodiments.
Figure 6 illustrates an enlarged view of a deposition zone formed by the deposition system according to the disclosed embodiments.
Figure 7 illustrates a schematic view of the repair of a part using the FSAM process according to the disclosed embodiments.
Figure 8 illustrates a flowchart for using a FSAM process to repair the part according to the disclosed embodiments.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to the use of solid-state additive manufacturing (AM) process for repairing MAR-M-247 material. A friction stir additive manufacturing (FSAM) process may be used to repair materials, such as aerospace materials, that are difficult or not possible to repair using traditional methods, such as MAR-M-247 nickel-based material. FSAM is a solid-state process that uses a rotating tool to deposit material onto a substrate. FSAM may provide the ability to repair complex geometries and the ability to produce high-quality repairs with minimal porosity.

An FSAM process may be used to repair a variety of defects, including cracks, holes, and corrosion damage enabling the rapid and cost-effective repair of complex components. The disclosed process may be used in the repair of aircraft components and the production of new aerospace parts. The disclosed embodiments define the FSAM variables based on the required depth of deposition and the required temperature. The process to define these variables may be a function of sacrificial rod infeed (pressure) and rod rotation speed. The selected parameters result in fine-grained microstructures. Grain refinement from FSAM-deposited layers increased the extent of epitaxial nucleation and led to grain refinement of the succeeding layers. The disclosed process may be defect-free compared to melt-base AM processes.

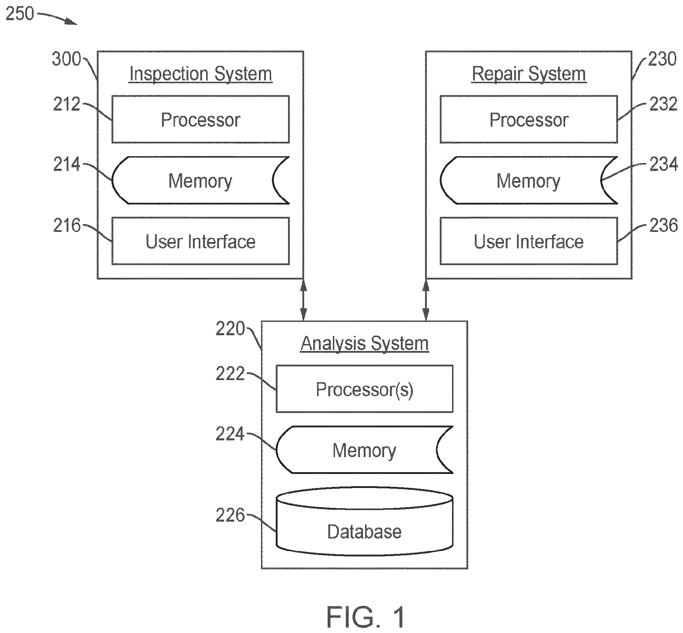

Figure 1 depicts a block diagram of a system 250 for repairing a part according to the disclosed embodiments. System 250 includes an inspection system 300, an analysis system 220, and a repair system 230. Although illustrated as separate systems with separate processors (e.g., processors 212, 222, 232), the present disclosure is not limited in this regard. For example, the system 250 may include a single processor, a single memory, and a single user interface and still remain within the scope of this disclosure.

Similarly, although inspection system 300 and repair system 230 are illustrated as separate systems with separate processors, memories and user interfaces, the present disclosure is not limited in this regard. For example, inspection system 300 and repair system 230 may be combined into a single system that communicates with analysis system 220, in accordance with various embodiments.

Analysis system 220 may include one or more processors 222. In this regard, analysis system 220 may be configured to process a significant amount of data. Analysis system 220 may be configured for remote computing (e.g., cloud-based computing), or the like. Thus, a processing time and a volume of data analyzed may be greatly increased relative to typical repair systems, in accordance with various embodiments.

Inspection system 300, analysis system 220, and repair system 230 each include a computer system comprising a processor (e.g., processor 212, processor(s) 222, and/or processor 232) and a memory (e.g., memory 214, memory 224, memory 234). Inspection system 300 and repair system 230 may each comprise a user interface (UI) (e.g., UI 216, UI 236). In various embodiments, inspection system 201 and repair system 230 may utilize a single user interface to control both systems. The present disclosure is not limited in this regard.

Analysis system 220 may further comprise a database 226. In various embodiments, the database 226 comprises various stored data for use by analysis system 220. The database 226 may include an inspected part database (e.g., with data from various prior inspected parts), a repair data database (e.g., with data from various prior repairs performed/approved), a load data database (e.g., with engine load data from structural and/or aerodynamic analysis), a test data database (e.g., with engine specific test data used for validation of structural and/or aerodynamic analysis), a design data database (e.g., with design models having nominal dimensions according to a product definition), and/or a material data database (e.g., with material for each component), in accordance with various embodiments.

System 250 may be configured for inspecting, analyzing, and repairing a part, in accordance with various embodiments. In this regard, the repair process for the part may be fully automated, in accordance with various embodiments, as described further herein.

In various embodiments, and as shown in Figure 1, systems 220, 230, and 300 may each store a software program configured to perform the methods described herein in a respective memory 214, 224, and 234 and run the software program using the respective processor 212, 222, and 232. The systems 220, 230, and 300 may include any number of individual processors 212, 222, and 232 and memories 214, 224, and 234. Various data may be communicated between the systems 220, 230, and 300 and a user via the user interfaces (e.g., UI 216, UI 236). Such information may also be communicated between the systems 220, 230, and 300 and external devices, database 226, and/or any other computing device connected to the systems 220, 230, and 300 (e.g., through any network such as a local area network (LAN), or wide area network (WAN) such as the Internet).

For systems 220, 230, and 300 depicted in Figure 1, each processor 212, 222, and 232 may retrieve and executes instructions stored in the respective memories 214, 224, and 234 to control the operation of the respective systems 220, 230, and 300. Any number and type of processor(s) (e.g., an integrated circuit microprocessor, microcontroller, and/or digital signal processor (DSP)), can be used in conjunction with the various embodiments. The processors 212, 222, and 232 may include, and/or operate in conjunction with, any other suitable components and features, such as comparators, analog-to-digital converters (ADCs), and/or digital-to-analog converters (DACs). Functionality of various embodiments may also be implemented through various hardware components storing machine-readable instructions, such as application-specific integrated circuits (ASICs), field-programmable gate arrays (FPGAs) and/or complex programmable logic devices (CPLDs).

The memories 214, 224, and 234 may include a non-transitory computer-readable medium (such as on a CD-ROM, DVD-ROM, hard drive or FLASH memory) storing computer-readable instructions stored thereon that can be executed by the processors 212, 222, and 232 to perform the methods of the present disclosure. The memories 214, 224, and 234 may include any combination of different memory storage devices, such as hard drives, random access memory (RAM), read only memory (ROM), FLASH memory, or any other type of volatile and/or nonvolatile memory.

The systems 230 and 300 may receive and display information via a respective user interface (e.g., UI 236 or UI 216). The user interfaces (e.g., UI 236 or UI 216) include various peripheral output devices (such as monitors and printers), as well as any suitable input or control devices (such as a mouse and keyboard) to allow users to control and interact with the software program.

In various embodiments, inspection system 300 and repair system 230 may each be in electronic communication with analysis system 220, directly or via a respective user interface (e.g., UI 236 or UI 216). Inspection system 300 and repair system 230 may comprise any suitable hardware, software, and/or database components capable of sending, receiving, and storing data. For example, inspection system 300 or repair system 230 may comprise a personal computer, personal digital assistant, cellular phone, smartphone (e.g., those running UNIX-based and/or Linux-based operating systems such as IPHONE^{®}, ANDROID^{®}, and/or the like), IoT device, kiosk, and/or the like. Inspection system 300 or repair system 230 may comprise an operating system, such as, for example, a WINDOWS^{®} mobile operating system, an ANDROID^{®} operating system, APPLE^{®} IOS^{®}, a LINUX^{®} operating system, and the like. Inspection system 300 or repair system 230 may also comprise software components installed on inspection system 300 or repair system 230 and configured to enable access to various system 250 components. For example, inspection system 300 or repair system 230 may comprise a web browser (e.g., MICROSOFT INTERNET EXPLORER^{®}, GOOGLE CHROME^{®}, APPLE SAFARI^{®} etc.), an application, a micro-app or mobile application, or the like, configured to allow inspection system 300 or repair system 230 to access and interact with analysis system 220.

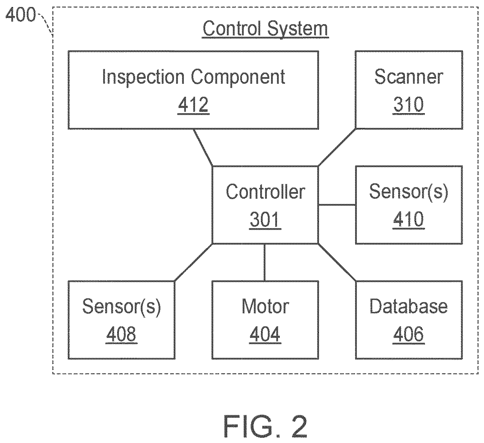

Figure 2 depicts a block diagram of a control system 400 for inspection system 300 according to the disclosed embodiments. In various embodiments, control system 400 for inspection system 300 comprises controller 301, tracking 3D scanner 310, a memory 402, a motor 404, a database 406, and sensor(s) 408, sensor(s) 410, and inspection component 412.

In various embodiments, the inspection component 412 comprises rollers for the curved track, a conveyor belt for the vertical track, and/or a holder coupled to tracking 3D scanner 310. In various embodiments, the inspection component 412 comprises only a holder. In various embodiments, the inspection component 412 comprises only the rollers for a curved track and the conveyor belt or linkages for a vertical track. The present disclosure is not limited in this regard. In various embodiments, the inspection component 412 is stationary and the part being inspected is moveable along three-axis, five-axis, or the like.

In various embodiments, the tracking 3D scanner 310 comprises a coordinate measuring machine (CMM), a mechanical scanner, a laser scanner, a structured scanner (e.g., a white light scanner, a blue light scanner, etc.), a non-structured optical scanner, a non-visual scanner (e.g., computed tomography), or the like. In various embodiments, the tracking 3D scanner 310 is a blue light scanner. In various embodiments, the tracking 3D scanner 310 may be swapped with another scanner at any point during an inspection step. In various embodiments, the inspection system 300 may be configured to swap the tracking 3D scanner 310 with a different scanner during the inspection step.

A "blue light scanner" as disclosed herein refers to a non-contact structure light scanner. The blue light scanner may have a scan range of between 100×75 mm² in accordance with various embodiments. In various embodiments, an accuracy of the blue light scanner may be between 0.005 and 0.015 mm. In various embodiments, the blue light scanner may be secured by a machine spindle. The machine spindle may facilitate the part's movement in the x-, y- and z- directions and rotation in the clockwise and counterclockwise directions so as to facilitate generating the CAD model. With the assistance of the machine spindle, the blue light scanner may be able to determine distances between adjacent points in the point cloud of between 0.04 and 0.16 mm as measured across three axes. In various embodiments, a volume accuracy of the blue light scanner may be approximately 0.8 mm/m. In various embodiments, a scan depth may be between approximately 100 and 400 mm.

In various embodiments, the blue light scanner may comprise a light source including a blue LED. In this regard, the blue light scanner may be configured to emit an average wavelength between 400 and 450 nm, in accordance with various embodiments. Although described with various specifications herein, the blue light scanner is not limited in this regard, and one skilled in the art may recognize the parameters of the blue light scanner may extend outside the exemplary ranges. Use of a blue light scanner provides a high-resolution point cloud for a three-dimensional object.

The controller 301 may be integrated into computer system of the inspection system 300, such as in processor 212 and/or memory 214 from Figure 1. In various embodiments, the controller 301 may be configured as a central network element or hub to various systems and components of the control system 400. In various embodiments, controller 301 may comprise a processor (e.g., processor 212). In various embodiments, controller 301 may be implemented as a single controller (e.g., via a single processor 212 and associated memory 214). In various embodiments, controller 301 may be implemented as multiple processors (e.g., a main processor and local processors for various components). The controller 301 can be a general-purpose processor, a digital signal processor (DSP), an application specific integrated circuit (ASIC), a field programmable gate array (FPGA) or other programmable logic device, discrete gate or transistor logic, discrete hardware components, or any combination thereof.

The controller 301 may comprise a processor configured to implement various logical operations in response to execution of instructions, for example, instructions stored on a non-transitory, tangible, computer-readable medium configured to communicate with the controller 301. System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

In various embodiments, the motor 404 of the control system 400 is operably coupled to the shaft 308 of the control system 400. In various embodiments, the motor 404 may comprise a direct current (DC) stepper, an alternating current (AC) motor or the like. The present disclosure is not limited in this regard. In various embodiments, the sensor(s) 408 include Hall effect sensor(s), optical sensor(s), resolver(s), or the like. In various embodiments, sensor(s) 408 may include sensor(s) configured to detect an angular position of the shaft 308 during an inspection step for a part. In this regard, during inspection of the part, the controller 301 receives sensor data from the sensor(s) 408. The controller 301 can utilize the sensor data received from the sensor(s) 408 to correlate an angular position of the part being inspected with a location of the tracking 3D scanner 310 as described further herein. In various embodiments, in an application with a robot arm, the part may remain stationary throughout an inspection process. Thus, coordinates of the holder may be determined via sensor(s) 408 in a similar manner to orient and construct the part being inspected as described further herein.

In various embodiments, the sensor(s) 410 are configured to detect a position of the tracking 3D scanner 310. In this regard, sensor(s) 410 may be position sensors (e.g., capacitive displacement sensors, eddy-current sensors, Hall effect sensors, inductive sensors, optical sensors, linear variable differential transformer (LVDT) sensors, photodiode array sensors, piezoelectric sensors, encoders, potentiometer sensors, ultrasonic sensors or the like). The present disclosure is not limited in this regard. Thus, during inspection of the part, controller 301 is able to determine a location of the tracking 3D scanner 310 and an angular position of the part throughout the inspection. Thus, based on the location of the tracking 3D scanner 310, an angular location of the part and scanning data received from the tracking 3D scanner 310, a digital map (e.g., a robust point cloud) can be generated for the part being inspected. In various embodiments, the point cloud encompasses the entire part (e.g., between 95% and 100% of a surface area of the part, or between 99% and 100% of the surface area of the part).

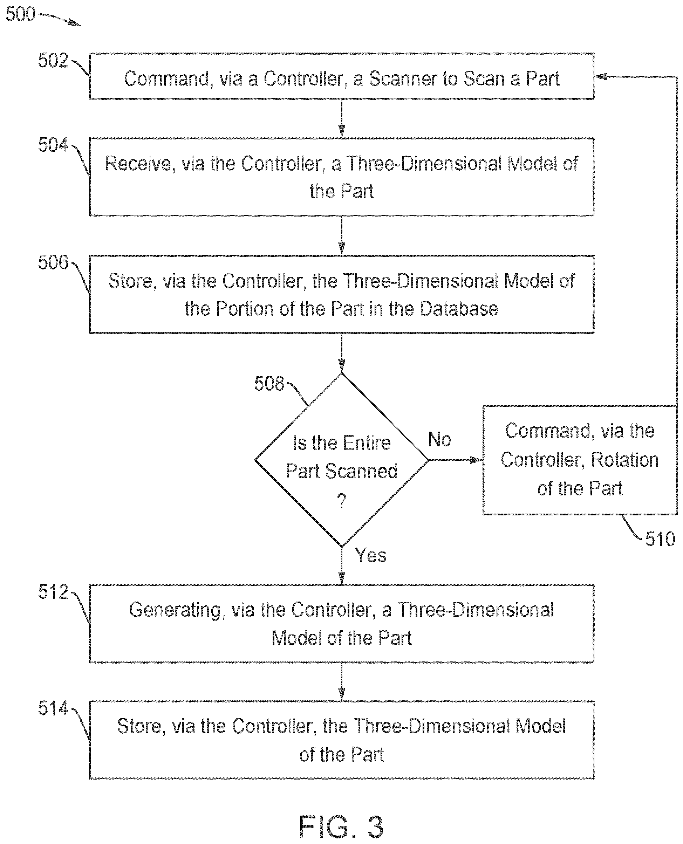

Figure 3 depicts a flowchart 500 for inspecting a part that is performed by control system 400 of inspection system 300 according to the disclosed embodiments. In various embodiments, flowchart 500 comprises commanding, via controller 301 and tracking 3D scanner 310 to scan a part (step 502). In some embodiments, the part may be a workpiece.

In various embodiments, commanding the tracking 3D scanner 310 in step 502 may further comprise commanding rollers of the curved track, commanding a conveyor belt or linkages of the vertical track or the like in conjunction with scanning via the tracking 3D scanner 310. In this regard, the controller 301 may provide a predetermined toolpath for the tracking 3D scanner 310 to scan the portion of the part, in accordance with various embodiments. However, the present disclosure is not limited in this regard, for example, step 502 may include commanding a scanner coupled to a holder to scan a portion of the part, or may include commanding a five-axis system to orient the part for scanning, or the like. Thus, step 502 may include any command to position the part being inspected relative to a scanner and scanning the part, in accordance with various embodiments.

Flowchart 500 further comprises receiving, via controller 400, a three-dimensional model of the part (step 504). In various embodiments, the three-dimensional model is a digital map (e.g., a point cloud). In this regard, in response to utilizing a CMM scanner or a structured light scanner, the tracking 3D scanner 310 measures discrete points of surfaces of the portion of the part being scanned and transmits the discrete points to the controller 301. In various embodiments, the point cloud may be relative to a datum defined by the inspection system 300. In this regard, a datum for the inspection system 300 may be defined in the memory (e.g., memory 214). In various embodiments, the datum is a center point of the part. Thus, the controller 301 is configured to determine a location of each point scanned via the tracking 3D scanner 310 based on the datum, a location of the tracking 3D scanner 310 when a scan occurs during step 502 from sensor(s) 410, measurement data from the tracking 3D scanner 310, and an angular position of the part from sensor(s) 408.

Flowchart 500 further comprises storing, via the controller 301, the three-dimensional model in a database 406 (step 506). Although described herein as intermittently storing scanned portions of the part, the present disclosure is not limited in this regard. For example, the tracking 3D scanner 310 may scan the entire part prior to transmitting the three-dimensional model to the controller 301 and still be within the scope of this disclosure. In this regard, the controller 301 may be configured to determine an amount of the part that has been scanned based on the angular position of the part and the position of the tracking 3D scanner 310 throughout step 502.

Flowchart 500 further comprises determining whether the part has been scanned in its entirety (e.g., between 95% and 100% or between 99% and 100% or approximately 100%). In this regard, the flowchart 500 may determine whether the tracking 3D scanner 310 has performed a scan at each predetermined arc angle (e.g., 1 degree, 3 degrees, 5 degrees, or the like) and a total angular rotation of the part for the scanning process has reached 360 degrees.

If the entire part has not been scanned, flowchart 500 further comprises commanding, via the controller 301, rotation of the part a fixed amount (e.g., 1 degree, 3 degrees, 5 degrees, 10 degrees, etc.). The present disclosure is not limited in this regard. The controller 301 may command the motor 404 to rotate the part by the fixed amount, in accordance with various embodiments.

In various embodiments, steps 502, 504, 506, and 508 are repeated until the entire part is scanned according to step 508, at which point flowchart 500 further comprises generating, via controller 301, a three-dimensional model of the part (step 512). In this regard, in response to the tracking 3D scanner 310 being a CMM scanner or a structured light scanner, the controller 301 may stitch together the point clouds for each portion of the part scanned via step 502 to generate a robust point cloud of the entire part (e.g., between 95% and 100% of an external surface area of the part, or between 99% and 100% of the external surface area of the part, or approximately 100% of the external surface area of the part). In various embodiments, the entire part refers to approximately 100% of an external surface area of all the part.

In various embodiments, flowchart 500 further comprises storing, via the controller 301, the three-dimensional model of the part in the database 406. In this regard, the three-dimensional model may be utilized for analyzing the inspected part, determining a repair for the inspected part and/or in repairing the inspected part.

In various embodiments, flowchart 500 may provide a fully automated solution for generating a robust three-dimensional model (e.g., a point cloud) for an inspected part, in accordance with various embodiments.

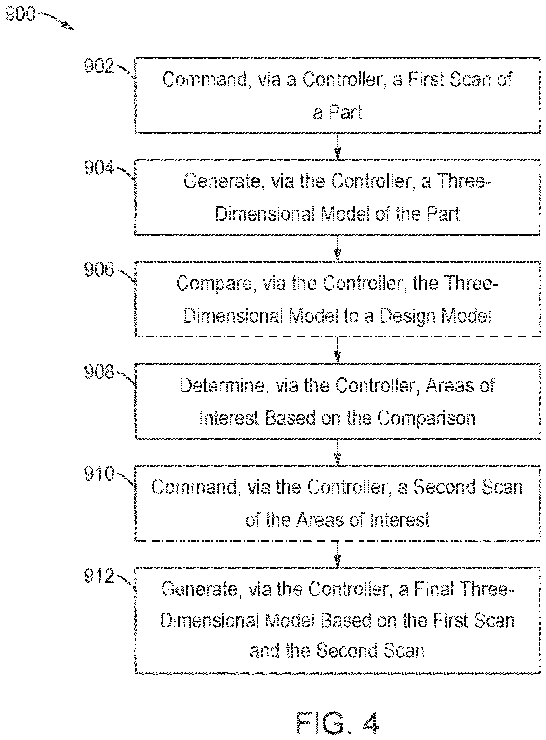

Figure 4 depicts a flowchart 900 for a feedback driven scan configured to be performed by control system 400 according to the disclosed embodiments.

The process disclosed by flowchart 900 comprises commanding, via the controller 301, a first scan of a part, or workpiece (step 902). The first scan of the bladed rotor may be in accordance with flowchart 500 as disclosed above. In various embodiments, the first scan may be performed with a scanner configured to produce a quicker, lower density point cloud (e.g., a CMM). In this regard, the first scan of the bladed rotor may be considered a high-level initial scan of the bladed rotor, in accordance with various embodiments.

The process disclosed by flowchart 900 further comprises generating, via the controller 301, a three-dimensional model (e.g., a point cloud) of the part based on the first scan (step 904), and comparing, via the controller 301, the three-dimensional model to a design model for the part being inspected (step 906). Although described herein with respect to comparing to a design model, the present disclosure is not limited in this regard. For example, the database 406 of the control system 400 may have various inspected part point clouds stored therein. In various embodiments, the various inspected parts with point clouds in the database 406 may include designations (i.e., approved without repairs or the like). In this regard, the comparing step 906 may utilize previously approved inspected part point clouds to compare the three-dimensional model generated from the first scan in step 904.

The process disclosed by flowchart 900 further comprises determining, via the controller 301, areas of interest on the bladed rotor based on the comparison in step 906 (step 908). Although described herein as the controller 301 determining the areas of interest, the present disclosure is not limited in this regard. For example, the controller 301 may be configured to transmit the digital data through an application-based software infrastructure that stores data on remote servers and may be configured for determining areas of interests of the part (i.e., via cloud-based computing or the like), in accordance with various embodiments. For example, with brief reference to Figure 1, the controller 301 may transmit the digital data to analysis system 220 (e.g., via a WAN such as the Internet). Analysis system 220 may perform analysis based on the three-dimensional model generated from the first scan in step 902. Analysis system 220 may output areas of interest to inspection system 300, in accordance with various embodiments. In this regard, controller 301 may receive, via the processor, areas of interest on the part after transmitting the digital data to a cloud-based computing software instead of performing steps 906 and 908 of flowchart 900 and still be within the scope of this disclosure.

In various embodiments, the comparing and determining of steps 906 and 908 of flowchart 900 may be performed by manual processes. For example, fluorescent penetrant inspection (FPI) may be performed manually on the part. In response to performing the FPI, a person may determine areas of interest of the part and input coordinates of the respective areas of interest into the processor (e.g., via a graphical user interface (GUI) or the like). In this regard, the process of flowchart 900 may include receiving, from a GUI, areas of interest for the part based on performing FPI or any other manual inspection process, in accordance with various embodiments.

In some embodiments, based on the sensor data received from the first scan in step 902, and described previously herein with respect to flowchart 500, the process disclosed by flowchart 900 further comprises commanding, via the controller 301, a second scan of the areas of interest determined from step 908 (step 910). In various embodiments, the second scan may include multiple scans with the scanner used for the first scan (e.g., in response to the tracking 3D scanner 310 being a CMM and having only a single scanner configuration). In various embodiments, the second scan may be performed with a higher resolution scanner (e.g., a structured light scanner). In this regard, a first tracking 3D scanner 310 may comprise a CMM scanner configured to perform step 902 of process disclosed by flowchart 900, and a second tracking 3D scanner 310 may comprise a structured light scanner configured to perform step 910 of process 900, or a structured light scanner with a more optimal focal length for a higher resolution image of a detailed area of the part. In various embodiments, the second scan may be performed after swapping out a first scanner with a second scanner (e.g., for an inspection system 300 with a single scanner configuration). In this regard, a CMM scanner used for step 902 may be swapped out with a structured light scanner prior to performing the second scan, in accordance with various embodiments. In various embodiments, the inspection system 300 may be configured to automatically swap the scanners (e.g., in a similar manner to a spindle of a Computer Numerical Control (CNC) machine swapping out one machining tool for another). The present disclosure is not limited in this regard.

The process disclosed by flowchart 900 further may comprise generating, via the controller 301, a final three-dimensional model based on the first scan and the second scan (step 912). In this regard, a point density in the areas of interest may be significantly greater than a point density outside the areas of interest, in accordance with various embodiments. In various embodiments, the process disclosed by flowchart 900 facilitates efficient scanning of bladed rotors with a focus on achieving high definition of potential problem areas (e.g., defects or the like). In this regard, by inputting the point cloud developed from the process disclosed by flowchart 900 into an analysis system, a margin of safety relative to any defect areas may be reduced, in accordance with various embodiments.

The disclosed embodiments implement a FSAM process to repair portions of the part or other components identified by the embodiments disclosed above. FSAM is a localized solid-state thermochemical process that may be used for microstructural modification. Location-specific microstructural enhancement that results from FSAM may be used to improve the properties and performance of the repaired areas where deemed necessary. This feature reduces costs associated with part repairs of high-performance MAR-M-247 material. FSAM process developments have enabled the deposition of Ni-base alloys. FSAM may produce microstructural refinement in the stir zone (SZ). An adaptation of FSAM to repair MAR-M-247 allows the repair of potentially unrepairable materials in a cost-effective manner.

FSAM may implement a consumable rotating rod of MAR-M-247 material that is progressively fed into the repaired piece or material, which may comprise a part or turbine engine component undergoing repair as identified using the embodiments disclosed in Figures 1-4. This action may be performed using a pneumatic, hydraulic, or mechanical feed mechanism. Localized heat may be added to the rod stock just above the deposition point. The heat may be added using an induction coil, a laser, acetylene torch flame, and the like. The temperature of the metallic material forming the rod may be raised to reduce the amount of heat needed to be produced by friction. By preheating the deposition rod to a near plastic state, the energy needed to spin the rod to generate frictional heat and the vertical force of the rod on the work piece may be reduced to a practical level.

Lateral confinement of the deposited material may be progressively achieved by shaped cam followers spaced at a desired wall thickness. Upper confinement of the deposited metal may be provided by the solid feed rod. The lower surface confinement may be provided by the material. Recently deposited material may provide the aft confinement. The forward face of the deposition zone is unconfined and may be characterized by a bow wave of plastic material. The plastic nature of the MAR-M-247 material in the deposition zone along with the stirring motion may insure that the microstructure will be substantially free of porosity and should have a fine grain size.

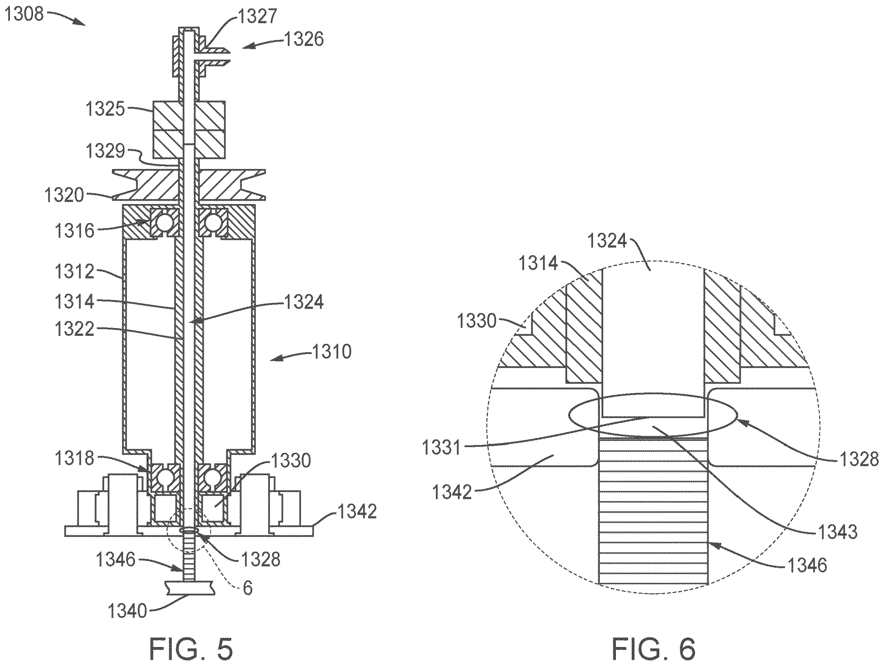

Figure 5 depicts a solid-state deposition system 1308 which includes a spindle 1310 according to the disclosed embodiments. The spindle 1310 has a housing 1312 that may be formed from any suitable material. A rotatable hollow shaft 1314 is located within housing 1312. The rotatable hollow shaft 1314 is supported for rotation by bearings 1316 and 1318. A drive pulley 1320 or another suitable device for rotating the shaft 1314 may be attached thereto. When in use, the drive pulley 1320 may be connected to a motor via a belt or chain for rotating the drive pulley 1320 and, as a result, the shaft 1314.

A solid feed rod 1324 of consumable metallic deposition material is positioned within the core 1322 of the hollow shaft 1314. The solid feed rod 1324 may be MAR-M-247 material, as disclosed above. Other metallic materials appropriate for repairing aircraft components also may be used. A feed mechanism 1326 is attached to the upper end 1329 of the shaft 1314. The feed mechanism 1326 exerts pressure on an upper end of the feed rod 1324. This action feeds the consumable deposition material into the deposition zone 1328.

In some embodiments, the feed mechanism 1326 may comprise a fitting 1327 for introducing a high pressure fluid, such as air, into the hollow core 1322 of the shaft 1314 and into contact with the upper end of the solid feed rod 1324. A rotating pressure union 1325 may be provided to join the fitting 1327 to the upper end 1329 of the shaft 1314. The high pressure fluid may be used to feed thee consumable deposition material in the rod 1324 into the deposition zone 1328.

The feed mechanism 1326 may comprise a hydraulic or mechanical feed mechanism positioned adjacent the upper end 1329 of the shaft 1314 to apply a pressure force to the upper end of the solid feed rod 1324 as an alternative to the fitting 1327 and the use of high-pressure air to feed the deposition material into the deposition zone 1328. The hydraulic or mechanical feed mechanism may be any suitable device.

A heating element 1330 is positioned adjacent the deposition zone 1328 at a location just above the deposition point 1331. The heating element 1330 may be positioned within the housing 1312 or external to the housing. The heating element 1330 may be an induction coil, a laser, an acetylene torch flame, and the like. The heating element 1330 may be used to raise the temperature of the metallic deposition material forming the rod 1324 to approximately 0.8 of the deposition material melt temperature. In some embodiments, this temperature may be less than 1100 degrees Celsius. The temperature of the material forming the rod 1324 is raised to reduce the amount of heat needed to be produced by friction.

By preheating the feed rod 1324 of MAR-M-247 material in this manner, the energy needed to spin the feed rod to generate frictional heat and the vertical force of the rod on the workpiece, or the repaired material, is reduced to a practical level. By heating the material forming the feed rod 1324 and applying pressure at the opposite end by the feed mechanism 1326, MAR-M-247 metal may be deposited on a surface of the part, or workpiece 1340, for repair of the material.

Figure 6 depicts an enlarged view of the deposition zone 1328 from by the deposition system 1308 according to the disclosed embodiments. As shown in Figure 6, lateral confinement of the deposited metal may be progressively achieved by shaped cam followers 1342 spaced at a desired wall thickness for the deposited material. The shaped cam followers 1342 may be conical rollers whose outer diameter surface insures that the rollers contact relatively soft material 1343 in the current deposition layer. Upper confinement of the deposited material may be provided by the solid feed rod 1324. The substrate or target workpiece 1340 provides lower confinement. Aft confinement is provided by the recently deposited material.

In some embodiments, the MAR-M-247 material may be deposited in layers 1346 on a surface of workpiece, or material, 1340. The forward face of the deposition zone may be unconfined and may be characterized by a bow wave of plastic deposition material. The state of the deposited material in deposition zone 1328, along with the stirring motion caused by the rotation of the feed rod 1324, leads to the microstructure being substantially free of porosity and having a fine grain size.

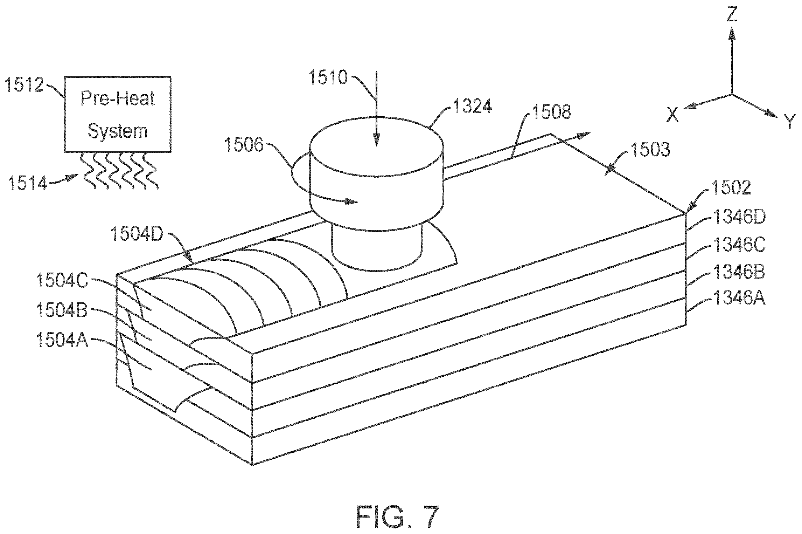

Figure 7 depicts a schematic view of the repair of a part 1502 using the FSAM process according to the disclosed embodiments. Part 1502 may correspond to workpiece 1340 disclosed above. Part 1502 may be identified using the inspection and repair processes disclosed above. A region of interest 1503 is identified for repair on the part 1502. Part 1502 may be unique in geometry and differ from what is disclosed in Figure 7. The MAR-M-247 is deposited in the region of interest 1503 using the FSAM process disclosed above.

The disclosed embodiments use the feed rod 1324 made from the MAR-M-247 alloy held in deposition system 1308. The layers 1346 are deposited on the sections of part 1502, which may be an aerospace part that requires repairs, as determined using the inspection system disclosed above. The surface may be cleaned and machined first. Pre-heat system 1512 may apply heat 1514 to the damaged area of part 1502.

An FSAM path is generated to address the region of interest 1503 and loaded onto repair system 230, which controls the deposition system 1308. The machine spindle 1310 will get the tool holder with the feed rod 1324 and start layer deposition with the selected spindle rotational speed and vertical infeed and longitudinal feed. The FSAM parameters of the speed and feeds are identified according to the disclosed embodiments. The parameters may result from a function of rotations per minute (RPM), the feed in the Z direction, and the feed in the Y direction. The deposition distance is set according the disclosed function and the number of layers is defined based on the defined volume of material. After finishing the deposition of all the repaired areas, the spindle 1310 will select a cutting tool for machining the deposited areas.

Referring to Figure 7, part 1502 may move in a welding, or Y, direction 1508. A downward force 1510 may promote the feed in the Z direction. An X direction also may be appreciated. Further, feed rod 1324 is subject to tool rotation 1506 as performed using system 1308. This results in a friction stir welded region 1504D in layer 1346D. The friction stir welded region 1504D may be layered on top of friction stir welded region 1504C in layer 1346C. The disclosed embodiments may layer friction stir welded regions on top of each other using the MAR-M-247 material from the feed rod 1324. For example, the layer 1346A includes friction stir welded region 1504A that may be the first deposit of material during the FSAM process. The layer 1346B includes friction stir welded region 1504B, which is applied on top of region 1504A and below region 1504C.

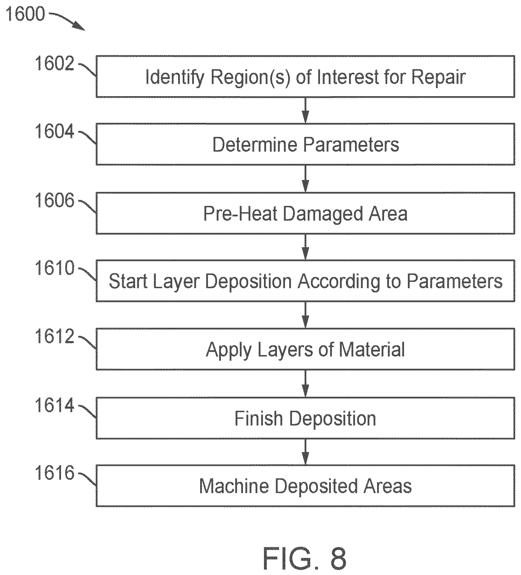

Figure 8 depicts a flowchart 1600 for using a FSAM process to repair the part 1502 according to the disclosed embodiments. Flowchart 1600 may refer to Figures 1-7 for illustrative purposes. Flowchart 1600, however, is not limited by the embodiments disclosed by Figures 1-7.

Step 1602 executes by identifying the region or regions of interest 1503 of the part 1502 for repair. As disclosed above in Figures 1-7, the repair process uses the inspection system 300, the analysis system 220, and the repair system 230 to acquire geometrical information of the damaged regions via a laser or blue light scanning process of part 1502. These areas of interest may have experienced different in-service operating conditions and, as a result, damage occurs. Individual components may be unique in geometry and may require tailored measurement to identify the repair zones, or regions of interest 1503.

Part 1502 may be scanned and compared to the original CAD model to identify the areas that will be repaired by adding the MAR-M-247 material. As disclosed above, after scanning, all coordinates of the measured points may be extracted from a measured point cloud, which may be used to build a parametric CAD model of the actual part 1502. By mapping the measured model with the in-process model prior to deposition and finishing, the location and volume of the regions of interest 1502 to be repaired may be identified. This feature creates the material deposition CAD geometry and machining CAD surfaces to be addressed by deposition system 1308.

Step 1604 executes by determining FSAM parameters according to the function of the disclosed embodiments. The FSAM parameters include the depth of the layers of material to apply in the region of interest 1503. From the depth, the speed of turning the feed rod 1324 in RPM and the feed speed may be determined. There may be two feeds, one in the Y direction, or welding direction 1508 and one in the Z direction of downward force 1510. The deposition distance is set and the number of layers defined based on the defined volume of material using the material deposition CAD geometry.

For example, a depth may be determined for the layers based on speed and feed rate of the deposition system. Alternatively, the depth for the layer of the layers may be determined based on these parameters. A speed of rotation 1506 and the speed in the welding direction 1508 may be determined or defined. The feed in other directions also may be considered. The number of layers may be determined using the depth of each layer in the defined volume of material. In some embodiments, the FSAM rotational speed and in-feed speed maybe determined based on the required thickness of each deposited layer.

Further to the above example, process parameters may include the rotational speed, or the speed of rotation 1506, which may impact heat generation and material flow. In addition, as disclosed above, the feed rate, or the speed at which deposition system moves along the part. Tool geometry also may be considered. Material properties of the feed rod also may be considered, such as thermal conductivity that affects how heat spreads through the material, viscosity that affects how the material behaves under pressure and temperature, and yield strength that determines how easily the material may be deformed. These properties may be particular to nickel alloy materials, such as MAR-M-247 alloys. These parameters may be determined based on the depth for the layer for the deposited material. Alternatively, the depth for the layers to be applied may be determined using these parameters.

Step 1606 executes by pre-heating the damaged area, or region of interest 1503 of the part 1502 using pre-heat system 1512. Step 1610 executes by starting layer deposition using the feed rod 1324 according the parameters determined above. For example, the layers may be deposited using deposition system 1308 at the determined layer depth. Referring to Figure 7, layers 1346A-D may have substantially the same depth as determined according to the disclosed embodiments.

Step 1612 executes by applying the layers 1346A-D of material in the region of interest 1503. Step 1614 executes by finishing the deposition by the deposition system 1308 when the region of interest 1503. Step 1616 executes by machining the deposited areas by selecting a cutting tool. After finishing the repair process using deposition system 1308, the part 1502 may be machined to obtain the required surface finish and geometry.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A method for repairing a part (1340; 1502) using a friction stir additive manufacturing (FSAM) process, the method comprising:
identifying a region of interest (1503) of the part (1340; 1502);
pre-heating the region of interest (1503) using a pre-heat system (1512) in conjunction with a deposition system (1308);
positioning a rod (1324) of consumable metallic deposition material within a rotatable hollow shaft (1314) of the deposition system (1308);
exerting pressure at an upper end of the rod (1324) to move the metallic deposition material into a deposition zone (1328) of the region of interest (1503) of the part (1340; 1502);
rotating the rotatable hollow shaft (1314) so as to rotate the rod (1324) while the pressure is being exerted to generate frictional heat when the rod (1324) contacts a surface of the part (1340; 1502) in the region of interest (1503); and
depositing at least one layer (1346; 1346A-D) of the metallic deposition material at a thickness using the deposition system (1308), wherein the deposition system rotates the rotatable shaft (1314) at a rotational speed and moves the part (1340; 1502) in a direction of a feed speed based on a function of the thickness of the at least one layer (1346; 1346A-D).

2. The method of claim 1, further comprising laterally confining the metallic deposition material in the deposition zone (1328) on the region of interest (1503) of the part (1340; 1502).

3. The method of claim 1 or 2, further comprising heating the rod (1324) using a heating element (1330) positioned adjacent the deposition zone (1328).

4. The method of claim 3, wherein the heating element (1330) is an induction coil, a laser, or an acetylene torch.

5. The method of any preceding claim, further comprising
scanning the part (1340; 1502) with a scanner (310) of an inspection system (300); and
determining the region of interest (1503) based on damage detected using a model of the scanned part (1340; 1502).

6. The method of any preceding claim, further comprising indicating the region of interest (1503) to be repaired to a repair system (230) coupled to the deposition system (1308).

7. The method of any preceding claim, further comprising machining the deposited at least one layer (1346; 1346A-D) of the metallic deposition material.

8. The method of any preceding claim, wherein the metallic deposition material includes an MAR-M-247 alloy material.

9. The method of any preceding claim, further comprising defining a number of the at least one layer (1346; 1346A-D) of the metallic deposition material.

10. A method for repairing a part (1340; 1502) having damage, the method comprising:
scanning the part (1340; 1502) using a scanning process to generate a scanned model, wherein the scanned model indicates the damage to the part (1340; 1502);
comparing the scanned model to an original model of the part (1340; 1502) to indicate a region of interest (1503) on the part (1340; 1502) having the damage;
identifying the region of interest (1503) on the part (1340; 1502);
placing the part (1340; 1502) in a deposition system (1308) having a spindle (1310) with a rotatable hollow shaft (1314);
exerting a pressure on a rod (1324) of metallic deposition material within the rotatable hollow shaft (1314);
determining at least one parameter for a friction stir additive manufacturing (FSAM) process using the deposition system (1308), wherein the at least one parameter includes a rotational speed of the rotatable hollow shaft (1314) and a speed in a feed direction for the deposition system (1308);
determining a thickness of a layer (1346; 1346A-D) of the metallic deposition material to be applied by the deposition system (1308);
rotating the rotatable hollow shaft (1314) at the rotational speed;
moving the part (1340; 1502) having the region of interest (1503) in the feed direction at the speed; and
applying at least one layer (1346; 1346A-D) of the metallic deposition material at the determined thickness of the layer (1346; 1346A-D),
wherein, optionally, one or more of:
the method further comprises pre-heating the region of interest (1503) on the part (1340; 1502) prior to applying the at least one layer (1346; 1346A-D) of the metallic deposition material;
the method further comprises heating a deposition zone (1328) of the at least one layer (1346; 1346A-D) in the region of interest (1503) using a heating element (1330);
the method further comprises:
providing a feed mechanism (1326) attached to an upper end (1329) of the rotatable hollow shaft (1314);
using the feed mechanism (1326) to exert the pressure to an end of the rod (1324); and
moving the metallic deposition material into a or the deposition zone (1328) in the region of interest (1503);
the metallic deposition material is a nickel alloy, optionally including a MAR-M-247 alloy.

11. A system (250) to repair a part (1340; 1502), the system comprising:
an inspection system (300) configured to identify a region of interest (1503) of the part (1340; 1502) having damage; and
a repair system (230) having a deposition system (1308), wherein the deposition system (1308) is configured to:
pre-heat the region of interest (1503) using a pre-heat system (1512);
position a rod (1324) of consumable metallic deposition material within a rotatable hollow shaft (1314) of the deposition system (1308);
exert pressure at an upper end of the rod (1324) to move the metallic deposition material into a deposition zone (1328) of the region of interest (1503) of the part (1340; 1502);
rotate the rotatable hollow shaft (1314) so as to rotate the rod (1324) while the pressure is being exerted to generate frictional heat when the rod (1324) contacts a surface of the part (1340; 1502) in the region of interest (1503); and
deposit at least one layer (1346; 1346A-D) of the metallic deposition material at a thickness using the deposition system (1308), wherein the deposition system (1308) rotates the rotatable shaft (1314) at a rotational speed and moves the part (1340; 1502) in a direction of a feed speed based on a function of the thickness of the at least one layer (1346; 1346A-D).

12. The system of claim 11, wherein the deposition system (1308) includes a heating element (1330) configured to heat the region of interest (1503) in the deposition zone (1328).

13. The system of claim 11 or 12, wherein the inspection system (300) includes a scanner (310) configured to scan the part (1340; 1502).

14. The system of any of claims 11 to 13, wherein the deposition system (1308) includes cam shaped followers (1342) comprising rollers having an outer diameter surface configured to contact the metallic deposition material in the deposition zone (1328).

15. The system of any of claims 11 to 14, wherein the metallic deposition material includes a MAR-M-247 alloy.
